Europäisches Patentamt

European Patent Office

Office européen des brevets

(19)

(11) Publication number: **0 401 754**
**A1**

# (12) EUROPEAN PATENT APPLICATION

(21) Application number: 90110620.3

(51) Int. Cl.⁵: **B60S 1/02**

(22) Date of filing: 05.06.90

(30) Priority: 08.06.89 IT 4162589

(43) Date of publication of application:
**12.12.90 Bulletin 90/50**

(84) Designated Contracting States:
**AT BE CH DE DK ES FR GB GR LI LU NL SE**

(71) Applicant: ISOCLIMA S.p.A.
Via A. Volta 14
I-35042 Este Padova(IT)

(72) Inventor: Giacon, Mauro
Via S. Caboto 15
I-35100 Padova(IT)

(74) Representative: Modiano, Guido et al
MODIANO, JOSIF, PISANTY & STAUB
Modiano & Associati Via Meravigli, 16
I-20123 Milano(IT)

(54) Windshield heating device, particularly for motor vehicles.

(57) The device is composed of a DC/AC converter (9) of appropriate power, provided with control means, which feeds a thin-film resistor (12) inserted during lamination between two layers of the glass of the windshield (A). Due to the considerable power used, the controls adopted have the function of preventing damage to the electric system of the vehicle and to the windshield itself.

Fig.1

EP 0 401 754 A1

The present invention relates to a windshield heating device particularly for motor vehicles.

It is known that one of the problems which frequently arise in motor vehicles in the winter period is the internal misting of windshields and, worse still, the ice which forms on the outside of said windshield.

In these conditions it is absolutely impossible to see safely through the windshield and it is therefore necessary to wait until the phenomenon has ended completely.

In order to do this, all motor vehicles are provided with means for conveying warm air onto the inner side of the windshield.

This means can eliminate internal misting in a relatively long time, whereas ice on the outer side is eliminated with even greater difficulty.

Stratified windshields are also known and widely used which contain thin metal filaments which, by being crossed by current, cause heating of the glass, which also diffuses in the interspaces between filaments, obtaining both internal demisting and external de-icing.

The problem of these devices is related to the fact that rapid de-icing is not possible.

In order to effect rapid de-icing, considerable currents would in fact have to be passed through each filament, with consequent excessive peaks of localized heating which could damage the glass.

Besides, it is equally not possible to insert a large number of relatively very close wires, since this would constitute an unacceptable visual impediment for good vision and therefore for safe driving.

Demisting and to an even greater extent de-icing consequently occur in very long times which cause long delays before starting to drive.

The aim of the present invention is to provide a device which allows an effective action of heating the windshield or rear window of vehicles in a relatively short time.

A consequent primary object is to provide a device which allows to distribute the heat uniformly on the glass to be defrosted or demisted.

Another object is to provide a device which despite absorbing considerable power can be installed in vehicles without having to modify their electric system in any way.

This aim and these objects as will become apparent hereinafter are achieved by a heating device for windshields or rear windows in particular for motor vehicles, characterized in that it comprises a DC/AC current converter, which is practically equal in power to the power which can be delivered by the vehicle alternator, combined with means for controlling the electric system, means for setting the heating times and means for adjusting the output power and for controlling the temperature of said windshield.

Further characteristics and advantages will become apparent from the detailed description of a preferred embodiment, given by way of non-limitative example and illustrated in the accompanying drawings, wherein:

figure 1 schematically illustrates a windshield provided with a device according to the invention;

figure 2 is a block diagram of the device;

figure 3 illustrates some possible solutions of the DC/AC-converter.

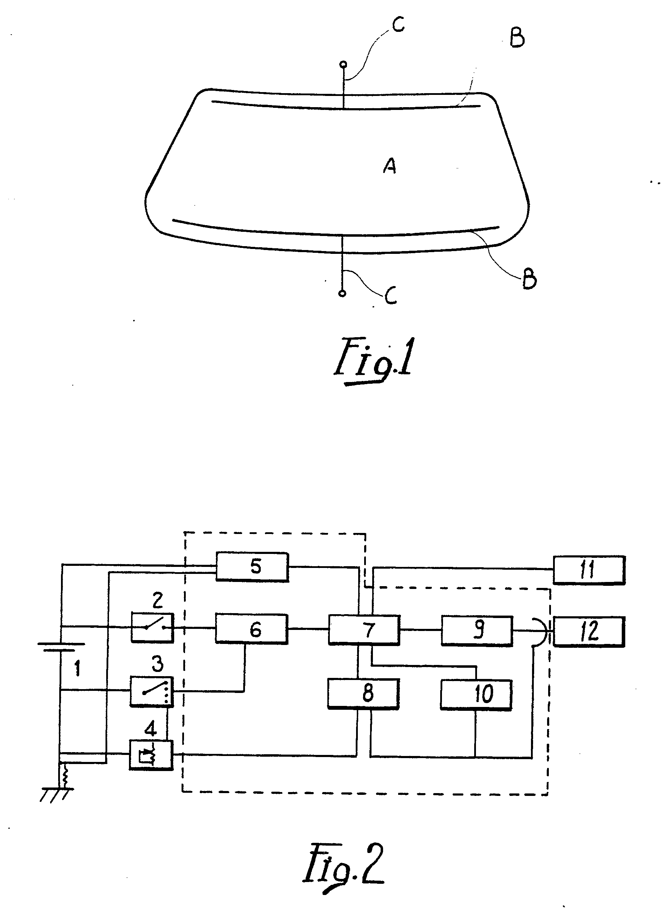

With reference to the above figures, a windshield according to the invention is illustrated in figure 1.

In said windshield, A indicates the contour of the glass, which is also the contour of a conducting material that is inserted during the lamination of the glass or with preliminary direct-application techniques or by means of the interposition of an actual conducting film deposited on the entire surface.

The windshield thus obtained encloses a uniform layer of conducting substance without losing any transparency or light transmission capacity, thereby obtaining the advantage of uniform thermal distribution in the entire structure.

Collectors, indicated by B and connected to two terminals C, are provided for feeding current.

The collectors are as widely extended as possible so as to have a uniform distribution of the electric field in the entire structure of the glass from the electrical point of view; a windshield of this kind is characterized by parameters such as electric resistance and total electric inductance (the latter if in the presence of non-stationary electric conditions).

Electric resistance depends on the geometric parameters of the windshield and in particular on the electric measure which is called the "quadratic resistivity" which qualifies the conductive film being used.

Taking these parameters into account, a DC/AC converter has been provided which is capable of increasing the effective mean value of the output voltage from the converter itself up to a considerable value with respect to the available voltage produced by the vehicle, wherein the alternator-battery combination is installed.

A performance in DC/AC conversion is also obtained which affects as little as possible the available capacity of the system.

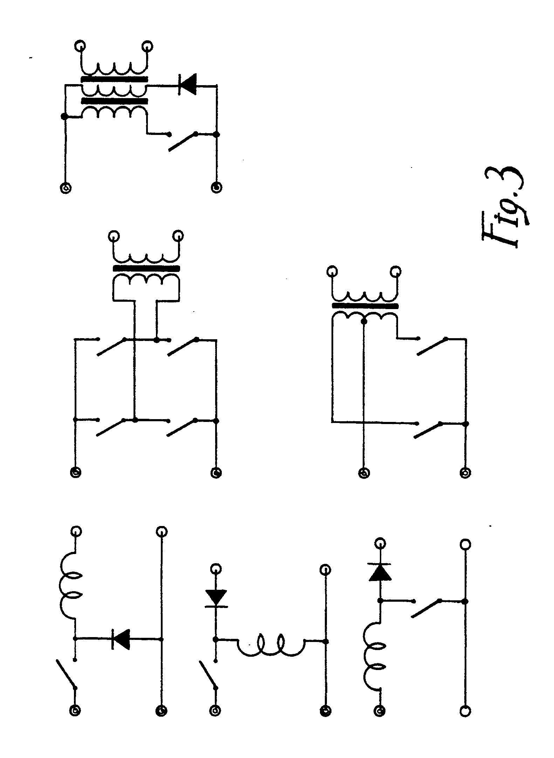

Figure 2 illustrates a functional block diagram of the device, the practical dimensions whereof will be linked to the parameters defined heretofore.

With reference to figure 2, the reference numeral 1 indicates the battery of the vehicle and the numeral 2 indicates a button for enabling the device, which can be operated by the user.

The reference numerals 3 and 4 indicate programming blocks whereby there are effected both a timing control with full power in output, and enabling for the continuous operation of the device with an output power level which can be adjusted to a power level which is lower than the maximum value. The output power level is continuously adjustable by means of the block 4.

Once it has received information of ignition by means of the blocks 2 and 3, the block 6 interprets the set timings by driving the block 7.

The block 7 comprises a control logic unit which processes the various signals arriving from a block 5, constituted by a device for controlling the state of the battery 1, from the block 6, which is a timer, from a block 8, which is a device for adjusting the output power, from a block 10, which is an overcurrent protection, and from a block 11, which is a temperature controller.

Said block 7 drives a block 9, which is a DC/AC converter. The converter 9 performs the conversion of the direct current to an alternating current. The level of the output voltage is raised to the median or effective values, required by the characteristics of the resistance of the windshield.

In practice the block 9 can be made according to one of the diagrams illustrated in figure 3, which are substantially equivalent to one another and can be chosen according to the instances and in particular according to the required power.

The block 12 indicates the resistance load constituted by the vehicle windshield.

Provisions are made in the block 5 so that, due to the power involved, the user cannot enable the device as a whole before starting the vehicle, in order to not significantly compromise the charge level of the vehicle battery.

For this purpose, the block 5 monitors the two parameters of the battery voltage and current, inhibiting when necessary the control logic of the block 7 and thus preventing the block 9 from being switched on.

Prevention from switching on the block 9 occurs when the sum of the powers delivered by the alternator and divided between the device and the other users tends to exceed the maximum capacity of the system.

The device described in its essential functional components is optimally suitable for achieving the proposed aim and objects, since it can effect rapid heating of a windshield or rear window using considerable power which achieves de-icing in very reduced times.

In practice, the use of a film resistor which affects the entire windshield allows to obtain an optimum and uniform distribution of the temperature without having to raise it even locally to values which might be dangerous for the integrity of the windshield itself.

After a first period of rapid heating and therefore of considerable delivered power, the device also allows to continue to keep the windshield or rear window heated at levels which are markedly lower than the maximum power value of the system but which are in any case sufficient to prevent the misting or forming of ice or frost.

Except for the particular type of windshield or rear window, the power supply and control device requires no modification of the electric system of the vehicle on which it is installed.

The control system allows, after installation and during use, to avoid any possibility of damage of the system which would occur in case of excessive input.

From what has been illustrated and described it can thus be seen that the proposed aim and objects have all been achieved.

As already mentioned, the device may obviously be executed with different componentry though the functions of the individual blocks are respected.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Windshield heating device particularly for motor vehicles, characterized in that it comprises a DC/AC current converter which is practically equal in power to the power which can be delivered by the vehicle alternator, combined with means for controlling the electric system, means for setting the heating times and means for adjusting the output power and for controlling the temperature of said windshield.

2. Device, according to claim 1, characterized in that said means for controlling the state of the electric system are constituted by a device which senses the state of the voltage-current on the battery of the vehicle, possibly inhibiting the operation of the converter when input is greater than the supply of the alternator for the part which exceeds the requirement of the other users of the vehicle.

3. Device, according to claim 1, characterized in that said control block prevents the activation of the converter if the vehicle is not running.

4. Device for heating windshields, characterized in that it comprises means for setting the temperature of the windshield and means for controlling said temperature.

5. Device for heating windshields, characterized in that the resistive load adapted to cause the heating of the windshield is constituted by a thin film which affects all of the windshield (or part thereof), said film distributing the current and therefore the temperature uniformly without creating discontinuity regions.

6. Device for heating windshields, characterized in that said resistive film is transparent and of a color which does not alter viewing through said windshield.

Fig.1

Fig.2

*Fig.3*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0256690 (GENERAL MOTORS)<br>* column 3, line 44 - column 4, line 48 *<br>* column 33, line 33 - column 34, line 24 *<br>* claims 8, 9; figure 1 * | 1-4 | B60S1/02 |
| X | FR-A-2250329 (SAINT-GOBAIN)<br>* claim 8 * | 5, 6 | |
| X | PATENT ABSTRACTS OF JAPAN<br>vol. 10, no. 115 (M-474)(2172) 30 April 1986,<br>& JP-A-60 244563 (OLYMPUS) 4 December 1985,<br>* the whole document * | 5 | |
| A | | 1, 4 | |
| | | | TECHNICAL FIELDS SEARCHED (Int. Cl.5 ) |
| | | | B60S |

The present search report has been drawn up for all claims

| Place of search | Date of completion of the search | Examiner |
|---|---|---|
| BERLIN | 17 SEPTEMBER 1990 | STANDRING, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ................................................................................

& : member of the same patent family, corresponding document

EPO FORM 1503 03.82 (P0401)